# EUROPÄISCHE PATENTANMELDUNG

(11) **EP 1 914 253 A2**
(43) Veröffentlichungstag der Anmeldung: **23.04.2008**
(21) Anmeldenummer: 07019583.9
(22) Anmeldetag: 06.10.2007
(51) Int. Cl.: C08G 18/08, C08G 18/12, C08G 18/65, C08G 18/68, C08G 18/72, C08G 18/73, C08G 18/75, C09D 175/14

(54) **UV-härtbare Polyurethan-Dispersionen**

(30) Priorität: 21.10.2006 DE 102006049764
(71) Anmelder: Bayer MaterialScience AG, 51368 Leverkusen (DE)
(72) Erfinder: Blum, Harald, Dr., 51375 Leverkusen (DE); Kopp, Richard, Dr., 51061 Köln (DE); Sommer, Stefan, Dr., 51373 Leverkusen (DE); Irle, Christoph, Dr., 41539 Dormagen (DE)

(57) **Zusammenfassung**

Die Erfindung betrifft neue UV-härtbare Polyurethan-Dispersionen auf Basis von mit Dicyclopentadien modifizierten ungesättigten Polyestern, die Herstellung dieser Polyurethan-Dispersionen und deren Verwendung als Lack, Beschichtung und/oder Klebstoff.

## Beschreibung

Die Erfindung betrifft neue UV-härtbare Polyurethan-Dispersionen auf Basis von mit Dicyclopentadien modifizierten ungesättigten Polyestern, die Herstellung dieser Polyurethan-Dispersionen und deren Verwendung als Lack, Beschichtung und/oder Klebstoff.

DE-A 102,06,565 beschreibt wasserverdünnbare Polyurethane für oxidativ trocknende oder UV-härtbare Beschichtungsmittel, die Struktureinheiten abgeleitet von 3,4-Epoxy-1-buten aufweisen, wobei die entsprechenden ungesättigten Polyether-Struktureinheiten im Polymer in Blöcken und optional zusammen mit (Meth)Acrlysäure- oder ungesättigten Fettsäure-Struktureinheiten vorliegen. Nachteilig an den dort beschriebenen Produkten ist, dass diese keine ausreichende Anfeuerung zeigen und die Pendelhärte der gehärteten Filme zu niedrig ist, was eine Nachhärtung durch Lagerung erforderlich macht.

In der DE-A 40,11,349 werden ungesättigte Polyesterpolyurethane beschrieben, die spezielle Allylether- und Polyalkylenglykolgruppierungen aufweisende Polyester enthalten. Die Produkte enthalten relativ hohe Mengen an Polyalkylenglykolgruppierungen und führen zu Beschichtungen mit relativ niedrigen Härten und nicht optimalen Beständigkeitseigenschaften, insbesondere gegenüber färbenden Flüssigkeiten und Wasser.

In der US-P 5,095,069 werden wärmehärtbare, hochmolekulare wässrige Polyurethane offenbart, die seitenständige Allylethergruppen und zusätzlich andere ungesättigte Gruppen, die mit den Allylethergruppen intern reagieren können, im Polymerrückgrat aufweisen. Die Polymere werden durch Einbrennen bei höheren Temperaturen ausgehärtet. Darüber hinaus weisen diese Produkte nur eine ungenügende Anfeuerung auf Holz auf.

Die DE-A 195,25,489 offenbart Polyesteracrylaturethan-Dispersionen auf Basis von Polyesteracrylatprepolymeren, die sich zu Beschichtungen mit guter physikalischer Trocknung, hoher Härte und guter Chemikalienbeständigkeit verarbeiten lassen. Die filmoptischen Eigenschaften, insbesondere die Anfeuerung von Holz, erreichen jedoch nicht das für viele Anwendungen notwendige Niveau.

In der EP-A 1 142 947 werden physikalisch trocknende Polyurethandispersionen mit verbesserter Anfeuerung beschrieben, die 2,2-Dimethyl-3-hydroxypropionsäure-(2,2-dimethyl-3-hydroxypropylester) enthalten. Die dort angegebene Verbesserung der Anfeuerung reicht allerdings für viele Anwendungen immer noch nicht aus.

An den bisher in der Lacktechnologie bekannten wässrigen UV-härtbaren Polyurethan-Dispersionen ist für eine Reihe von Anwendungen nachteilig, dass sie entweder physikalisch trocknen, dann aber keine optimale Anfeuerung von Holzuntergründen ergeben oder aber vor der Aushärtung klebrige, empfindliche Filme ohne physikalische Trocknung mit dann in der Regel besserer Anfeuerung ermöglichen.

Die Aufgabe der vorliegenden Erfindung bestand daher in der Bereitstellung von wässrigen, durch energiereiche Strahlung, insbesondere UV-Strahlung, härtbare Polyurethan-Dispersionen, die möglichst wenig organische Lösemittel enthalten, eine physikalische Trocknung bei Raumtemperatur aufweisen, eine ausgezeichnete Anfeuerung von Holzuntergründen zeigen, sehr gut haften und Filme von hoher Härte ergeben. Darüber hinaus sollten sich die erfindungsgemäßen Dispersionen zu gegen Belastung mit Substanzen, wie Wasser, Alkohol, Rotwein, Kaffee beständigen Beschichtungen verarbeiten lassen.

Überraschenderweise wurde gefunden, dass Polyurethan-Dispersionen, die ungesättigte, mit Dicyclopentadien modifizierte Polyesterharze enthalten, die gestellten Anforderungen erfüllen.

Gegenstand der Erfindung sind wässrige Polyurethan-Dispersionen, enthaltend ungesättigte, mit Dicyclopentadien modifizierte Polyesterharze als Aufbaukomponente.

Die erfindungsgemäßen Polyurethan-Dispersionen, enthalten Umsetzungsprodukte aus
a) mindestens einem ungesättigten, mit Dicyclopentadien modifizierten Polyesterharz,
b) mindestens einem, mindestens difunktionellen Polyisocyanat und
c) mindestens einer hydrophilierenden Komponente.

Die erfindungsgemäßen Polyurethan-Dispersionen enthalten gegebenenfalls Komponenten ausgewählt aus der Gruppe der
d) ungesättigte Gruppen enthaltenden Polymeren und/oder Monomeren,
e) Hydroxy- und/oder Amino-Gruppen aufweisenden Oligomeren, Polymeren und/oder Monomeren sowie
f) Mono-, Di-, Polyaminen und/oder Hydroxyaminen.

Die erfindungsgemäßen Polyurethan-Dispersionen enthalten Umsetzungsprodukte aus

3 bis 50 Gew. -%, bevorzugt 3 bis 35 Gew. -% der Komponente a), 7 bis 50 Gew. -%, bevorzugt 12 bis 40 Gew. -% der Komponente b), 1 bis 25 Gew. -%, bevorzugt 1 bis 10 Gew. -% der Komponente c), 10 bis 75 Gew. -%, bevorzugt 30 bis 65 Gew. -% der Komponente d) 0 bis 40 Gew. -%, bevorzugt 0 bis 20 Gew. -% der Komponente e) und 0,1 bis 6 Gew. -%, bevorzugt 0,25 bis 4 Gew. -% der Komponente f),
wobei sich die Prozentangaben zu a) bis f) zu 100 Gew.-% ergänzen.

Bevorzugt enthalten die erfindungsgemäßen Polyurethan-Dispersionen Umsetzungsprodukte aus
a) mindestens einem ungesättigten Polyesterharz,
b) mindestens einem, mindestens difunktionellen Polyisocyanat,
c) mindestens einer hydrophilierenden Komponente mit mindestens einer Hydroxy-, Amino- und/oder Thiogruppe und mindestens einer ionischen oder potentiell ionischen Gruppe und/oder Ethylenoxid-, Ethylenoxid/Propylenoxid-Copolymer und/oder Blockcopolymerstruktureinheiten,
d) mindestens einer Komponente ausgewählt aus der Gruppe der (Poly)ester(meth)acylate, (Poly)ether(meth)acrylate, (Poly)urethan(meth)acrylate, (Poly)epoxy(meth)acrylate, (Poly)etherester(meth)acrylate, ungesättigte Polyester mit Allyletherstruktureinheiten,
e) gegebenenfalls hydroxyfunktionellen Diolen und/oder Triolen des Molekulargewichts 62 bis 242 und/oder hydroxyfunktionellen Oligomeren bzw. Polymeren wie Polyester, Polycarbonate, Polyurethane, C2-, C3-, und/oder C4-Polyether, Polyetherester, Polycarbonatpolyester des zahlenmittleren Molekulargewichtes 700 bis 4000 g/Mol und
f) mindestens einem Mono-, Di- und/oder Polyamin und/oder Hydroxyamin.

Besonders bevorzugt sind die zuvor genannten erfindungsgemäßen Polyurethan-Dispersionen, in welchen

Komponente a) mindestens ein ungesättigtes Polyesterharz ist, welches mit 5 bis 35 Gew. -% Dicyclopentadien modifiziert ist,

Komponente b) mindestens ein, mindestens difunktionelles Polyisocyanat ist, welches zu mindestens 60 Gew.-% aus aliphatischen und/oder cycloaliphatischen Polyisocyanaten besteht,

Komponente d) mindestens eine Verbindung ausgewählt aus der Gruppe der Polyesteracylate, Polyetheracrylate, Polyepoxyacrylate, Urethanacrylate und/oder Polyetheresteracrylate ist, welches neben den ungesättigten Gruppen noch Hydroxylgruppen aufweist,
enthalten.

Bevorzugt enthalten die erfindungsgemäßen Polyurethan-Dispersionen mindestens einen Initiator und gegebenenfalls weitere Hilfsmittel und Zusatzstoffe, die eine Aushärtung mit energiereicher Strahlung, wie z.B. Elektronenstrahlen oder UV-Strahlen ermöglichen bzw. beschleunigen.

Geeignete Initiatoren sind z.B. Fotoinitiatoren, die durch UV- oder sichtbares Licht aktiviert werden können. Fotoinitiatoren sind an sich bekannte, kommerziell vertriebene Verbindungen, wobei zwischen unimolekularen (Typ I) und bimolekularen (Typ II) Initiatoren unterschieden wird. Geeignete (Typ I)-Systeme sind wie aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylphosphinoxide, Phenylglyoxylsäureester, Campherchinon, α-Aminoalkylphenone, α,α-Diakoxyacetophenone und α-Hydroxyalkylphenone. Bevorzugt sind Fotoinitiatoren, die leicht in wässrige Beschichtungsmittel einarbeitbar sind. Solche Produkte sind beispielsweise Irgacure^{®} 500, Irgacure^{®} 819 DW (Fa. Ciba, Lampertheim, DE), Esacure^{®} KIP (Fa. Lamberti, Aldizzate, Italien). Es können auch Gemische dieser Verbindungen eingesetzt werden.

Die ungesättigten, mit Dicyclopentadien modifizierten Polyesterharze a) werden erhalten durch Veresterung bzw. Umsetzung von
a1) hydroxyfunktionellen Di-, Tri- oder Polyolen mit
a2) carboxyl- oder anhydridfunktionellen Rohstoffen mit
a3) Dicyclopentadien und
a4) gegebenenfalls weitere Rohstoffen.

Geeignete hydroxyfunktionelle Di-, Tri- oder Polyole a1) sind z.B. Ethylenglykol, Diethylenglykol, Triethylenglykol, Tetraethylenglykol, Propylenglykol, Dipropylenglykol, Tripropylenglykol, 1,2-Butandiöl, 1,3-Butandiol, 1,4-Butandiol, Neopentylglykol, Hexandiol, 1,4-Cyclohexan-dimethanol, 1,4- Dihydroxycyclohexan, Trimethylolpropan, Glycerin, Pentaerythrit, Benzylalkohol, 2-Ethylhexylalkohol, Butyldiglykol, Butylglykol und auch Umsetzungsprodukte der genannten hydroxyfunktionellen mit Ethylenoxid und/oder Propylenoxid.

Bevorzugte Komponenten a1) sind Ethylenglykol, Diethylenglykol, Triethylenglykol, Propylenglykol, Dipropylenglykol, Butyldiglykol, Neopentylglykol, Butandiol und/oder Hexandiol.

Geeignete carboxy- bzw. anhydridfunktionelle Rohstoffe a2) sind Maleinsäureanhydrid, Fumarsäure, Phthalsäureanhydrid, Isophthalsäure, Terephthalsäure, Hexahydrophthalsäureanhydrid, Bernsteinsäure, Adipinsäure, Sojaölfettsäure, Ölsäure, Tetrahydrophthalsäureanhydrid, Benzoesäure, 2-Ethylhexansäure oder gesättigte C₈- bis C₂₀-Monocarbosäuren.

Bevorzugte Rohstoffe a2) sind Maleinsäureanhydrid, Phthalsäureanhydrid, Fumarsäure, Tetrahydrophthalsäureanhydrid und/oder Adipinsäure, wobei besonders bevorzugt Komponente a2) immer zumindest anteilig Maleinsäureanhydrid enthält.

Gegebenenfalls enthaltene weitere Rohstoffe a4) können sein z.B. Trimethylolpropanmono- und/oder Trimethylolpropandiallylether, Glycidylmethacrylat, Acrylsäure, Methacrylsäure, Sojaöl und andere natürlich vorkommende Öle.

Die ungesättigten, mit Dicyclopentadien modifizierten Polyesterharze a) sind bevorzugt Umsetzungsprodukte von
a1) 30 bis 65 Gew.-% hydroxyfunktionellen Di-, tri- oder Polyole mit
a2) 25 bis 65 Gew.-% carboxyl- bzw anhydridfunktionellen Rohstoffen mit
a3) 5 bis 35 Gew.-% Dicyclopentadien,
wobei sich die Prozentangaben von a1) bis a3) zu 100 Gew.-% ergänzen.

Die Dicyclopentadiengruppen enthaltenden ungesättigten Polyesterharze werden nach an sich bekannten Veresterungsverfahren, die ein- oder bevorzugt mehrstufig, bei Temperaturen von 140 bei 220°C, unter Wasserabspaltung durchgeführt werden, erhalten.

Beispielsweise kann die Komponente a) in der Weise hergestellt werden, dass in einem ersten Reaktionsschritt aus einem Säureanhydrid, wie z.B. Maleinsäureanhydrid und einem Diol, wie z.B. Diethylenglykol bei 140- 150°C ein Halbester gebildet wird, welcher anschließend bei 140°C mit Dicyclopentadien zur Reaktion gebracht wird. Anschließend wird nochmals Diol, z.B. eine Mischung aus Diethylenglykol und Ethylenglykol sowie ein Stabilisator (z.B. Toluhydrochinon) zugegeben, auf 190°C aufgeheizt und solange verestert, bis die gewünschte Säurezahl, Hydroxylzahl und/oder Viskosität des ungesättigten Polyesterharzes erreicht ist. Nach Abkühlen wird nochmals stabilisiert (z.B. mit Toluhydrochinon und Trimethylhydrochinon) und, gegebenenfalls nach Lösen in Aceton, abgefüllt.

Es kann gegebenenfalls auch ein azeotropes Schleppmittel, wie z.B. Isooktan, Isononan, Toluol, Xylol oder Cyclohexan eingesetzt werden.

Die Veresterung wird üblicherweise bis zum Erreichen einer bestimmten Säurezahl und/oder einer bestimmten Hydroxylzahl, gegebenenfalls auch bis zum Erreichen einer bestimmten Viskosität durchgeführt.

Zu Stabilisierungszwecken werden üblicherweise Stabilisatoren wie z.B. Toluhydrochinon, Trimethylhydrochinon und/oder Di-tert.-Butylhydrochinon zugegeben.

Geeignete, mindestens difunktionelle Polyisocyanate b) sind beispeilsweise 1,3-Cyclohexandiisocyanat, 1-Methyl-2,4-diisocyanato-cyclohexan, 1-Methyl-2,6-diisocyanato-cyclohexan, Tetramethylendiisocyanat, 4,4'-Diisocyanatodiphenylmethan, 2,4'-Diisocyanatodiphenylmethan, 2,4-Diisocyanatotoluol, 2,6-Diisocyanatotoluol, α,α,α,'α,'-Tetra-methyl-*m*- oder *p-*xylylendiisocyanat, 1,6-Hexamethylendiisocyanat, 1-Isocyanato-3,3,5-trimethyl-5-isocyanatomethylcyclohexan (Isophorondiisocyanat) und 4,4'-Diisocyanato-dicyclohexylmethan, sowie deren Mischungen, gegebenenfalls auch mit anderen Isocyanaten oder/und höherfunktionellen Homologen bzw. Oligomeren mit Urethan-, Biuret-, Carbodiimid-, Isocyanurat-, Allophanat-, Iminooxadiazindion- und/oder Uretdiongruppen.

Bevorzugt enthält die Polyisocyanatkomponente b) mindestens 60 Gew.- % cycloaliphatische und/oder aliphatische, mindestens difunktionelle Isocyanate.

Besonders bevorzugt enthält die Polyisocyanatkomponente b) Isophorondiisocyanat, 1-Methyl-2,4/(2,6)-diisocyanatocyclohexan, 4,4'- Diisocyanatodicyclohexylmethan und/oder 1,6-Hexamethylendiisocyanat, gegebenenfalls in Kombination mit 2,4-Diisocyanatotoluol oder 2,6-Diisocyanatotoluol.

Bevorzugt ist die Komponente c) eine hydrophilierende Komponente mit mindestens einer Hydroxy-, Amino- und/oder Thiogruppe und mindestens einer ionischen oder potentiell ionischen Gruppe und/oder nichtionische hydrophilierend wirkende Gruppen wie z.B. C₂ - bzw. C₂/C₃ - Polyethergruppen.

Bevorzugt geeignete isocyanatreaktive Gruppen sind dabei Hydroxyl- und Aminogruppen.

Unter ionisch bzw. potentiell ionische Gruppen werden Funktionalitäten, wie z.B. -COOY, -SO₃Y, -PO(OY)₂ (Y beispielsweise = H, NN₄⁺, Metallkation), -NR₂, -NR₃⁺ (R = H, Alkyl, Aryl), verstanden, die bei Wechselwirkung mit wässrigen Medien ein pH-Wert-abhängiges Dissoziationsgleichgewicht eingehen und auf diese Weise negativ, positiv oder neutral geladen sein können.

Geeignete ionische oder potentiell ionische Verbindungen c) sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-alanin, 2-(2-Amino-ethylamino)-ethansulfonsäure, Ethylendiamin-propyl- oder butylsulfonsäure, 1,2- oder 1,3-Propylendiamin-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyl-diethanolamin als hydrophile Aufbaukomponenten. Bevorzugte ionische oder potentielle ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von 2-(2-Amino-ethylamino-)ethansulfonsäure oder des Additionsproduktes von IPDI und Acrylsäure (EP-A 0 916 647, Beispiel 1) sowie der Dimethylolpropionsäure.

Geeignete nichtionisch hydrophilierend wirkende Verbindungen sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 3, aber auch Verbindungen der allgemeinen Formel (I), 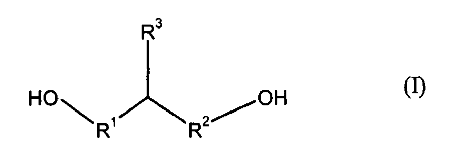 in welcher
R¹ und R² unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
R³ für einen alkoxyterminierten Polyethylenoxidrest steht.

Nichtionisch hydrophilierend wirkende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonomethyl-, -monoethyl- bzw. -monobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Die genannten Säuren werden durch Umsetzung mit Neutralisationsmitteln, wie z.B. Triethylamin, Ethyldiisopropylamin, Dimethylcyclohexylamin, Dimethylethanolamin, Ammoniak, N-Methylmorpholin, NaOH und/oder KOH in die entsprechenden Salze überführt. Der Neutralisationsgrad liegt dabei zwischen 50 und 125 %.

Geeignete, ungesättigte Gruppen enthaltende Monomere, Oligomere und/oder Polymere d) sind z.B. (Poly)ester(meth)acrylate, (Poly)ether(meth)acrylate, (Poly)epoxy(meth)acrylate, (Poly)etherester(meth)acrylat, (Poly)urethan(meth)acrylate, ungesättigte Polyester mit Allyletherstrukureinheiten und Kombinationen der genannten Verbindungen.

Die Komponente d) enthält radikalisch polymerisierbare Doppelbindungen, bevorzugt solche von hydroxyfunktionellen Acrylate und/oder Methacrylaten. Beispiele sind 2-Hydroxyethyl(meth)acrylat, Polyethylenoxid-mono(meth)acrylate, Polypropylenoxidmono(meth)acrylate, Polyalkylenoxidmono(meth)acrylate, Poly(s-caprolacton)mono(meth)acrylate, wie z.B. Tone^{®} M100 (Union Carbide, USA), 2-Hydroxypropyl(meth)acrylat, 4-Hydroxybutyl(meth)acrylat, 3-Hydroxy-2,2-dimethylpropyl(meth)acrylat, die Mono-, Di- , Tri- oder Tetraacrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische.

Geeignet sind auch Alkohole, die sich aus der Umsetzung von doppelbindungshaltigen Säuren mit gegebenenfalls doppelbindungshaltigen, monomeren Epoxidverbindungen erhalten lassen, so z.B. die Umsetzungsprodukte von (Meth)acrylsäure mit Glycidyl(meth)acrylat oder dem Glycidylester der Versaticsäure.

Weiterhin können Isocyanat-reaktive, oligomere oder polymere ungesättigte Acrylat- und/oder Methacrylatgruppen enthaltende Verbindungen als Komponente d) alleine oder in Kombination mit den vorgenannten monomeren Verbindungen eingesetzt werden. Bevorzugt werden als Komponente d) hydroxylgruppenhaltige Polyesteracrylate mit einem OH-Gehalt von 30 bis 300 mg KOH/g, bevorzugt von 60 bis 200 mg KOH/g, besonders bevorzugt von 70 bis 120 mg KOH/g eingesetzt.

Bei der Herstellung der hydroxyfunktionellen Polyesteracrylate d) können insgesamt 7 Gruppen von Monomerbestandteilen zur Anwendung kommen:
1. (Cyclo)Alkandiole wie zweiwertige Alkohole mit (cyclo)aliphatisch gebundenen Hydroxylgruppen des zahlenmittleren Molekulargewichtsbereichs 62 bis 286, z.B. Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, wie z.B. Diethylenglykol, Triethylenglykol, Tetraethylenglykol, Dipropylenglykol, Tripropylenglykol, Polyethylen-, Polypropylen- oder Polybutylenglykole mit einem zahlenmittleren Molekulargewicht von 200 bis 4000, bevorzugt 300 bis 2000, besonders bevorzugt 450 bis 1200. Umsetzungsprodukte der zuvor genannten Diole mit ε-Caprolacton oder anderen Lactonen können ebenfalls als Diole zum Einsatz gelangen.
2. Drei- und höherwertige Alkohole des zahlenmittleren Molekulargewichtsbereichs 92 bis 254, wie z.B. Glycerin, Trimethylolpropan, Pentaerythrit, Dipentaerythrit und Sorbit oder auf diesen Alkoholen gestartete Polyether wie z.B. das Umsetzungsprodukt von 1 mol Trimethylolpropan mit 4 mol Ethylenoxid.
3. Monoalkohole wie z.B. Ethanol, 1- und 2-Propanol, 1- und 2-Butanol, 1- Hexanol, 2-Ethylhexanol, Cyclohexanol und Benzylalkohol.
4. Dicarbonsäuren des zahlenmittleren Molekulargewichtsbereichs 104 bis 600 und/oder deren Anhydride, wie z.B. Phthalsäure, Phthalsäureanhydrid, Isophthalsäure, Tetrahydrophthalsäure, Tetra-hydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimerfettsäuren.
5. Höherfunktionelle Carbonsäuren bzw. deren Anhydride wie z.B. Trimellithsäure und Trimellithsäureanhydrid.
6. Monocarbonsäuren, wie z.B. Benzoesäure, Cyclohexancarbonsäure, 2-Ethylhexansäure, Capronsäure, Caprylsäure, Caprinsäure, Laurinsäure, natürliche und synthetische Fettsäuren.
7. Acrylsäure, Methacrylsäure bzw. dimere Acrylsäure.

Geeignete hydroxylgruppenhaltige Polyesteracrylate d) enthalten das Umsetzungsprodukt von mindestens einem Bestandteil aus Gruppe 1 oder 2 mit mindestens einem Bestandteil aus Gruppe 4 oder 5 und mindestens einem Bestandteil aus Gruppe 7.

Bevorzugte Bestandteile aus der Gruppe 1) sind: Ethandiol, 1,2- und 1,3-Propandiol, 1,4-Butandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, wie z.B. Diethylenglykol, Triethylenglykol, Tetraethylenglykol, Dipropylenglykol, und Tripropylenglykol.

Bevorzugte Bestandteile aus der Gruppe 2) sind: Glycerin, Trimethylolpropan, Pentaerythrit oder auf diesen Alkoholen gestartete Polyether wie z.B. das Umsetzungsprodukt von 1 mol Trimethylolpropan mit 4 mol Ethylenoxid.

Bevorzugte Bestandteile aus den Gruppen 4) bzw. 5) sind: Phthalsäureanhydrid, Isophthalsäure, Tetrahydrophthalsäureanhydrid, Hexahydrophthalsäure, Hexahydrophthal-säureanhydrid, Maleinsäureanhydrid, Fumarsäure, Bernsteinsäureanhydrid, Glutarsäure, Adipinsäure, Dodecandisäure, hydrierte Dimerfettsäuren und Trimellithsäureanhydrid.

Bevorzugter Bestandteil aus der Gruppe 7) ist Acrylsäure.

Gegebenenfalls können in diese Polyesteracrylate auch aus dem Stand der Technik allgemein bekannte, dispergierend wirkende Gruppen eingebaut werden. So können als Alkoholkomponente anteilig Polyethylenglykole und/oder Methoxypolyethylenglykole mitverwendet werden. Als Verbindungen seien beispielsweise auf Alkoholen gestartete Polyethylenglykole, Polypropylenglykole und deren Blockcopolymere sowie die Monomethylether dieser Polyglykole genannt. Besonders geeignet ist Polyethylenglykol-1500- und/oder Polyethylenglykol-500-monomethylether.

Weiterhin ist es möglich, nach der Veresterung einen Teil von Carboxylgruppen, insbesondere die der (Meth)acrylsäure, mit Mono-, Di- oder Polyepoxiden umzusetzen. Bevorzugt sind beispielsweise die Epoxide (Glycidylether) von monomeren, oligomeren oder polymeren Bisphenol-A, Bisphenol-F, Hexandiol und/oder Butandiol oder deren ethoxilierten und/oder propoxilierten Derivaten. Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen 0 und 20 mg KOH/g, bevorzugt zwischen 0 und 10 mg KOH/g und besonders bevorzugt zwischen 0 und 5 mg KOH/g. Die Reaktion wird bevorzugt durch Katalysatoren wie Triphenyphosphin, Thiodiglykol, Ammonium- und/oder Phosphoniumhalogeniden und/oder Zirkon- oder Zinnverbindungen wie Zinn(II)ethylhexanoat katalysiert.

Die Herstellung von Polyesteracrylaten wird in der DE-A 4 040 290 (S.3, Z. 25 - S.6, Z. 24), DE-A-3 316 592 (S. 5, Z. 14 - S. 11, Z. 30) und P. K. T. Oldring (Ed.), Chemistry & Technology of UV & EB Formulations For Coatings, Inks & Paints, Vol. 2, 1991, SITA Technology, London, S. 123 - 135 beschrieben.

Ebenfalls bevorzugt als Komponente d) sind die an sich bekannten hydroxylgruppenhaltigen Epoxy(meth)acrylate mit OH-Gehalten von 20 bis 300 mg KOH/g, bevorzugt von 100 bis 280 mg KOH/g, besonders bevorzugt von 150 bis 250 mg KOH/g oder hydroxylgruppenhaltige (Poly)urethan(meth)acrylate mit OH-Gehalten von 20 bis 300 mg KOH/g, bevorzugt von 40 bis 150 mg KOH/g, besonders bevorzugt von 50 bis 100 mg KOH/g sowie deren Mischungen untereinander und Mischungen mit hydroxylgruppenhaltigen, ungesättigten Polyestern sowie Mischungen mit Polyester(meth)acrylaten oder Mischungen hydroxylgruppenhaltiger ungesättigter Polyester mit Polyester(meth)acrylaten. Solche Verbindungen werden ebenfalls in P. K. T. Oldring (Ed.), Chemistry & Technology of UV & EB Formulations For Coatings, Inks & Paints, Vol. 2, 1991, SITA Technology, London S. 37 -56 beschrieben. Hydroxylguppenhaltige Epoxy(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, Bisphenol-F, Hexandiol und/oder Butandiol oder deren ethoxilierten und/oder propoxilierten Derivaten.

Ebenfalls geeignet als Komponente d) sind (Poly)etheracrylate, die Umsetzungsprodukte sind aus Acrylsäure und oder Methacrylsäure mit Polyethern mit freien Hydroxylgruppen. Die Polyether sind z.B. Homo-, Co- oder Blockcopolymerisate von Etylenoxid, Propylenoxid und/oder Tertrahydrofuran auf beliebigen hydroxy- und/oder aminfunktionellen Startermolekülen, wie z.B. Trimethylolpropan, Diethylenglykol, Dipropylengykol, Glycerin, Pentaerythrit, Neopentylglykol, Butandiol und/oder Hexandiol.

Komponente d) weist bevorzugt neben den ungesättigten Verbindungen noch NCO-reaktive Verbindungen, insbesondere Hydroxylgruppen, auf. Über diese Hydroxylgruppen ist ein teilweiser bzw. vollständiger Einbau in die Polyurethan-Dispersion möglich. Es ist auch möglich, verschiedene Komponenten d) mit und ohne Hydroxylgruppen gleichzeitig einzusetzen, dies führt dazu, dass ein Teil der Komponente d) in das Polyurethan eingebaut wird und ein Teil, falls er keine hydrophilen Gruppen eingebaut enthält, durch das Polyurethan, dass in diesem Fall als polymerer Emulgator wirkt, dispergiert wird.

Bevorzugte Komponenten d) sind Verbindungen ausgewählt aus der Gruppe der Polyesteracylate, Polyetheracrylate, Polyepoxyacrylate, Urethanacrylate und/oder Polyetheresteracrylate, welche neben den ungesättigten Gruppen noch Hydroxylgruppen aufweisen.

Besonders bevorzugt als Komponente d) sind hydroxyfunktionelle Polyesteracrylate, Polyetheracrylate und Polyepoxyacrylate.

Geeignete Hydroxy- und/oder Amino-Gruppen aufweisende Oligomere, Polymere und/oder Monomere e) sind z.B.:
1) Niedermolekulare Polyole, wie z.B. 2 bis 20 Kohlenstoffatome enthaltende aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol.
2) Oligomere bzw. höhermolekulare Polyole, wie z.B. Di- oder Polyole oder Aminoalkohole mit einem zahlenmittleren Molekulargewicht im Bereich von 500 bis 13000 g/mol, bevorzugt 700 bis 4000 g/mol, wie z.B. hydroxyfunktionelle Oligomere bzw. Polymere wie Polyester, Polycarbonate, Polyurethane, C2-, C3-, und/oder C4-Polyether, Polyetherester oder Polycarbonatpolyester. Bevorzugt sind Polymere mit einer mittleren Hydroxylfunktionalität von 1,5 bis 3,5, bevorzugt von 1,8 bis 2,5.

Geeignete Polyesteralkohole sind solche auf Basis von aliphatischen, cycloaliphatischen und/oder aromatischen Di-, Tri- und/oder Polycarbonsäuren mit Di-, Tri-, und/oder Polyolen sowie Polyesteralkohole auf Lacton-Basis. Bevorzugte Polyesteralkohole sind z.B. Umsetzungsprodukte von Adipinsäure, Isophthalsäure und Phthalsäureanhydrid mit Hexandiol, Butandiol, Diethylenglykol, Monoethylenglykol oder Neopentylglykol oder Mischungen der genannten Diole des zahlenmittleren Molekulargewichts von 500 bis 4000, bevorzugt 800 bis 2500.

Ebenfalls geeignet sind Polyetherole, die durch Polymerisation von cyclischen Ethern oder durch Umsetzung von Alkylenoxiden mit einem Startermolekül erhältlich sind.

Beispielhaft seien genannt die Polyethylen- und/oder Polypropylenglykole eines zahlenmittleren Molekulargewichts von 500 bis 13000, weiterhin Polytetrahydrofurane eines zahlenmittleren Molekulargewichts von 500 bis 8000, bevorzugt von 800 bis 3000.

Ebenfalls geeignet sind hydroxyl-terminierte Polycarbonate, die durch Umsetzung von Diolen oder auch Lacton-modifizierten Diolen oder auch Bisphenolen, wie z.B. Bisphenol A, mit Phosgen oder Kohlensäurediestern wie Diphenylcarbonat oder Dimethylcarbonat zugänglich sind. Beispielhaft seien genannt die polymeren Carbonate des 1,6-Hexandiols eines mittleren Molekulargewichts von 500 bis 8000, sowie die Carbonate von Umsetzungsprodukten des 1,6-Hexandiols mit ε-Caprolacton im molaren Verhältnis von 1 bis 0,1. Bevorzugt sind vorgenannte Polycarbonatdiole eines mittleren Molekulargewichts von 800 bis 3000 auf Basis 1,6-Hexandiol und/oder Carbonate von Umsetzungsprodukten des 1,6-Hexandiols mit ε-Caprolacton im molaren Verhältnis von 1 bis 0,33.

Hydroxyl-terminierte Polyamidalkohole und Hydroxyl-terminierte Polyacrylatdiole, z.B. Tegomer^{®} BD 1000 (Fa. Tego GmbH, Essen, DE) sind ebenfalls einsetzbar.

Die erfindungsgemäßen Polyurethan-Dispersionen enthalten bevorzugt als Komponente d) hydroxyfunktionelle Polyesteralkohole und/oder hydroxyl-terminierte Polycarbonate und/oder hydroxyfunktionelle C4-Polyether.

Geeignete Mono-, Di-, Polyamine und/oder Hydroxyamine f) werden zur Erhöhung der Molmasse eingesetzt, können aber auch zur Begrenzung der Molmasse oder zur Verzweigung des Polymeren verwendet werden und werden bevorzugt gegen Ende der Polyadditionsreaktion zugegeben. Diese Reaktion kann in organischer Phase oder/und im wässrigen Medium durhcgeführt werden. Üblicherweise sind die Di- und/oder Polyamine reaktiver als Wasser gegenüber den Isocyanatgruppen der Komponente b). Exemplarisch seien genannt Ethylendiamin, 1,3-Propylendiamin, 1,6-Hexamethylendiamin, Hydrazin, Isophorondiamin, 1,3-, 1,4-Phenylendiamin, 4,4'-Diphenylmethandiamin, aminofunktionelle Polyethylenoxide oder Polypropylenoxide, die unter dem Namen Jeffamin^{®}, D-Reihe (Fa. Huntsman Corp. Europe, Belgien) erhältlich sind, Alkoxysilangruppenhaltige Mono-oder Diamine, Diethylentriamin, Triethylentetramin und Hydrazin. Bevorzugt sind Isophorondiamin, Ethylendiamin und/oder 1,6-Hexamethylendiamin. Besonders bevorzugt ist Ethylendiamin.

Anteilig können auch Monoamine, wie z.B. Butylamin, Ethylamin und Amine der Jeffamin^{®} M-Reihe (Huntsman Corp. Europe, Belgien), aminofunktionelle Polyethylenoxide und Polypropylenoxide zugesetzt werden.

Gegenstand der Erfindung ist auch ein Verfahren zur Herstellung der erfindungsgemäßen Polyurethan-Dispersionen, dadurch gekennzeichnet, dass durch Umsetzung der Komponenten a), c), gegebenenfalls d) und e) in einem oder mehreren Reaktionsschritten, mit einem Überschuss an Komponente b) ein isocyanatfunktionelles Prepolymer erhalten wird, wobei das Neutralisationsmittel zur Erzeugung der für die Dispergierung notwendigen ionischen Gruppen vor, während oder nach dieser Prepolymer-Herstellung zugegeben werden kann, gefolgt durch Zugabe von Wasser zum Prepolymer oder Überführen des Prepolymeren in eine wässrige Vorlage, gegebenenfalls gefolgt durch einen Kettenverlängerungsschritt durch Zugabe der Komponente f).

Das optional zugegebene Lösemittel kann anschließend aus der Dispersion destillativ entfernt werden.

Die Herstellung der erfindungsgemäßen Polyurethan-Dispersionen kann auf verschiedener Art und Weise erfolgen:

In einer möglichen Ausführungsform des erfindungsgemäßen Verfahrens werden die Komponenten a), c), gegebenenfalls d) und e), gegebenenfalls in organischer Lösung in einem Reaktionsschritt, mit einem Überschuss an Komponente b) zu einem isocyanatfunktionellen Prepolymeren umgesetzt, wobei das Neutralisationsmittel zur Erzeugung der für die Dispergierung notwendigen ionischen Gruppen vor, während oder nach dieser Prepolymer-Herstellung zugegeben werden kann, gefolgt durch den Dispergierschritt durch Zugabe von Wasser zum Prepolymer bzw. Überführen des Prepolymeren in eine wässrige Vorlage. Anschließend kann eine Kettenverlängerung durch Zugabe der Komponente f) durchgeführt werden und gegebenenfalls die destillative Abtrennung des Lösemittels.

Eine weitere Ausführungsform des erfindungsgemäßen Herstellverfahren ist die Umsetzung der Komponenten a), c), gegebenenfalls d) und e), gegebenenfalls in organischer Lösung in einem Reaktionsschritt, mit einem Überschuss an Komponente b) zu einem isocyanatfunktionellen Prepolymeren, wobei das Neutralisationsmittel zur Erzeugung der für die Dispergierung notwendigen ionischen Gruppen vor, während oder nach dieser Prepolymer-Herstellung zugegeben werden kann, gefolgt durch einen Kettenverlängerungsschritt durch Zugabe der Komponente f) sowie gefolgt durch den Dispergierschritt durch Zugabe von Wasser zum Prepolymer bzw. Überführen des Prepolymeren in eine wässrige Vorlage. Anschließend kann die destillative Abtrennung des Lösemittels erfolgen.

Ebenfalls eine weitere Ausführungsform des erfindungsgemäßen Herstellverfahren besteht darin, das Prepolymer in einem mehrstufigen Verfahren herzustellen, in dem in einem ersten Reaktionsschritt Komponenten a) und c) mit einem Überschuss an Komponente b) umgesetzt und dieses Zwischenprodukt dann in einem zweiten Reaktionsschritt mit Komponente d) und/oder e) zur Reaktion gebracht wird, gefolgt von Dispergierung und Kettenverlängerung mit der Komponente f) oder gefolgt von Kettenverlängerung und Dispergierung, wobei das Neutralisationsmittel an jeder beliebigen Stelle des Reaktionsablaufes vor oder auch während des Dispergierschrittes zugesetzt werden kann. Anschließend kann die destillative Abtrennung des Lösemittels erfolgen.

Mehrstufige Verfahren sind selbstverständlich auch möglich in anderer Reihenfolge der Umsetzung der Komponenten.

Es ist ebenfalls möglich, Dispergierschritt und Destillationsschritt parallel, das heißt gleichzeitig durchzuführen.

Die Herstellung der erfindungsgemäßen Polyurethan-Dispersionen erfolgt üblicherweise bei 20 bis 150°C, bevorzugt bei 25 bis 75°C.

Geeignet Lösemittel sind prinzipiell alle Lösemittel bzw. Lösemittelgemische, die nicht mit den Reaktionskomponenten reagieren, wie z.B. N-Methylpyrrolidon, N-Ethylpyrrolidon, Butylacetat, Ethylacetat, Methoxypropylacetat, Diethylenglykoldimethylether, Dioxan, Dimethylformamid, Xylol, Toluol, Solvent Naphta, Cyclohexanon, Methylisobutylketon, Diethylketon, Methylethylketon oder Aceton. Die Lösemittel können anschließend ganz oder teilweise durch Destillation entfernt werden. Es ist auch möglich nach Herstellung der erfiindungsgemäßen Dispersion weitere Lösemittel, z.B. hydroxfunktionelle Lösemittel, wie z.B. Butyldiglykol, Methoxypropanol oder Butylglykol zuzusetzen.

Bevorzugt ist die Herstellung in Aceton mit anschließender destillativer Entfernung des Lösemittels nach Herstellung der Dispersion bzw. während des Dispergierschrittes. Die erfindungsgemäßen Polyurethan-Dispersionen enthalten weniger als 5 Gew.-%, bevorzugt weniger als 1 Gew.-% und besonders bevorzugt weniger als 0,5 Gew.-% an organischen Lösemitteln.

Das erfindungsgemäße Verfahren kann unter Einsatz bestimmter Katalysatoren erfolgen. Geeignete Katalysatoren sind prinzipiell alle, die die Umsetzung von Isocyanatgruppen mit Hydroxylgruppen katalysieren, wie z.B. tertiäre Amine, Zinn-, Zink- oder Wismuth-Verbindungen, insbesondere Triethylamin, Ethyldiisopropylamin, Dimethylcyclohexylamin, N-Methylmorpholin, 1,4-Diazabicyclo-[2,2,2]-oktan, Zinndioktoat oder Dibutylzinndilaurat.

Ebenfalls geeignet können sein, Salze des Zinks, des Titans, des Zirkons, des Molybdän und des Wismuts. Die Menge des Katalysators kann durch den Fachmann den Erfordernissen der Herstellung angepasst werden. Geeignete Mengen sind z.B. 0,002 bis 1 Gew. -%, bevorzugt ist die Verwendung von 0,01 bis 0,1 Gew. -%. Die Umsetzung kann auch ohne Verwendung eines Katalysators durchgeführt werden.

Die erfindungsgemäßen Polyurethan-Dispersionen können als Klarlacke und/oder als pigmentierte Lacke und Beschichtungen und in oder als Klebstoffe verwendet werden. Sie können dabei als alleiniges Bindemittel, aber auch in Kombination mit anderen Bindemitteln, die vorzugsweise aber nicht ausschließlich in Dispersionsform vorliegen, eingesetzt werden.

Gegenstand der vorliegenden Erfindung sind somit auch Bindemittelmischungen, enthaltend die erfindungsgemäßen Polyurethan-Dispersionen.

Die erfindungsgemäßen Polyurethan-Dispersionen können auch in Bindemittelmischungen mit anderen Dispersionen eingesetzt werden. Dies können Dispersionen sein, die ebenfalls ungesättigte Gruppen enthalten, wie z.B. ungesättigte, polymerisierbare Gruppen enthaltende Dispersionen auf Polyester-, Polyurethan-, Polyepoxid-, Polyether-, Polyamid-, Polysiloxan-, Polycarbonat-, Epoxyacrylat-, Polymerisat-, Polyesteracrylat-, Polyurethan-Polyacrylat- und/oder Polyacrylatbasis.

Es können auch solche Dispersionen, z.B. auf Basis von Polyestern, Polyurethanen, Polyepoxiden, Polyethern, Polyamiden, Polyvinylestern, Polyvinylethern, Polysiloxanen, Polycarbonaten, Polymerisaten und/oder Polyacrylaten, in den erfungsgemäßen Bindemittelmischungen enthalten sein, die funktionelle Gruppen, wie z.B. Alkoxysilangruppen, Hydroxygruppen und/oder gegebenenfalls in blockierter Form vorliegende Isocyanatgruppen aufweisen. So können z.B. dual cure Systeme hergestellt werden, die über zwei verschiedene Mechanismen ausgehärtet werden können.

Es können auch Dispersionen auf Basis von auf Polyestern, Polyurethanen, Polyepoxiden, Polyethern, Polyamiden, Polysiloxanen, Polyvinylethern, Polybutadienen, Polyisoprenen, Chlorkautschuken, Polycarbonaten, Polyvinylestern, Polyvinylchloriden, Polymerisaten, Polyacrylaten, Polyurethan-Polyacrylat-, Polyesteracrylat-, Polyetheracrylat-, Alkyd-, Polycarbonat-, Polyepoxid-, Epoxyacrylatbasis in den erfindungsgemäßen Bindemittelmischungen enthalten sein, die keine funktionellen Gruppen aufweisen. Damit kann z.B. der Grad der Vernetzungsdichte reduziert werden, die physikalische Trocknung beeinflusst z.B. beschleunigt werden oder eine Elastifizierung bzw. auch eine Haftungsanpassung vorgenommen werden.

Beschichtungsmittel, enthaltend die erfindungsgemäßen Polyurethan-Dispersionen können auch Aminovernetzerharze, z.B. auf Melamin- oder Harnstoffbasis und/oder Polyisocyanate mit freien oder mit blockierten Polyisocyanatgruppen, z.B. auf Basis von gegebenenfalls hydrophilierende Gruppen enthaltenden Polyisocyanaten aus Hexamethylendiisocyanat, Isophorondiisocyanat und/oder Toluylidendiisocyanat mit Urethan-, Uretdion-, Iminoxadiazindion-, Isocyanurat-, Biuret- und/oder Allophanatstrukturen in den erfindungsgemäßen Bindemittelmischungen enthalten.

Die erfindungsgemäßen Polyurethan-Dispersionen können auch in Mischung mit nicht wasserlöslichen bzw. wasserdispergierbaren, ungesättigte Gruppen enthaltenden Oligomeren bzw. Polymeren eingesetzt werden, wobei die nicht wasserlöslichen bzw. wasserdispergierbaren, ungesättigte Gruppen enthaltenden Oligomeren bzw. Polymeren den erfindungsgemäßen Polyurethan-Dispersionen vor dem Dispergieren zugesetzt werden, wodurch die erfindungsgemäßen Polyurethan-Dispersionen als polymere Emulgatoren für diese Substanzen dienen.

Ebenfalls zu Kombination mit den erfindungsgemäßen Dispersionen geeignet sein können sogenannte Reaktivverdünner, niedrigviskose Verbindungen mit ungesättigten Gruppen, wie z.B. Hexandiolbisacrylat, Trimethylolpropantrisacrylat, Trimethlolpropandiacrylat, Pentaerythrittetraacrylat, Dipentaerythrithexaacrylat, Diepoxidbisacrylate auf Bisphenol A Basis.

Lacke, Beschichtungssysteme und Klebstoffe auf Basis der erfindungsgemäßen Dispersionen können vielfältige Additive und Zusatzstoffe enthalten, wie z.B. Stabilisatoren, Initiatoren, Antioxidantien, Verlaufsmittel, Entschäumer, Benetzungsmittel, Beschleuniger, und/oder Lichtschutzmittel.

Gegenstand der Erfindung ist auch die Verwendung der erfindungsgemäßen Polyurethan-Dispersionen in oder als Lacke und Beschichtungen und/oder Klebstoffen.

Mit den erfindungsgemäßen Dispersionen können grundsätzlich alle Untergründe lackiert bzw. beschichtet werden, wie z.B. mineralische Untergründe, Holz, Holzwerkstoffe, Möbel, Parkett, Türen, Fensterrahmen, metallische Gegenstände, Kunststoffe, Papier, Pappe oder Kork.

Die erfindungsgemäßen Polyurethan-Dispersionen können als Einschichtlack, als Grundierung und/oder als Decklack eingesetzt werden. Sie können z.B. durch Spritzen Rollen, Tauchen, Walzen und Gießen appliziert werden.

Die erfindungsgemäßen Dispersionen können auch in oder als Klebstoffe eingesetzt werden, z.B. in Kontaktklebstoffen, in thermoaktivierbaren Klebstoffen oder in Kaschierklebstoffen.

### Beispiele:

### 1) Herstellung des ungesättigten, mit Dicyclopentadien modifizierten Polyesterharzes a1)

In einer Edelstahlapparatur mit elektrischer Heizung, innenliegender Kühlschlange, Ankerrührer, Rückflusskühler, Kolonne, Glasbrücke und Stickstoffeinleitung bzw. -überleitung werden 42,47 Teile Maleinsäureanhydrid und 22,95 Teile Diethylenglykol eingewogen , mit Stickstoff inertisiert und unter Überleiten von Stickstoff sowie unter Ausnutzung der exothermen Reaktion in einer Stunde auf 150°C erhitzt und bei dieser Temperatur 1 Stunde gerührt, um die Halbesterbildung abzuschliessen. Nach dem Abkühlen auf 140°C werden 16,45 Teile Dicyclopentadien zugegeben und der Ansatz 4 Stunden bei 140°C gehalten. Am Schluss werden SZ (205 +/- 5) und OH-Zahl (< 15) bestimmt. Dann werden 5,95 Teile Ethylenglykol, 17,73 Teile Diethylenglykol und 0,2 Teile Toluhydrochinon zugegeben. Der Ansatz wird so auf 190°C aufgeheizt, dass die Kopftemperatur nicht über 105°C ansteigt und gehalten bis durch Veresterung eine Säurezahl von ca. 12 und eine Hydroxylzahl von 105 bis 125 mg KOH/g Substanz erreicht ist. Nach Abkühlen auf 150°C werden 0,1 Teile Toluhydrochinon und 0,03 Teile Trimethylhydrochinon zugesetzt. Dann wird weiter auf 55°C abgekühlt und in Aceton gelöst. Es resultiert eine ca. 72%ige Lösung eines mit Dicyclopentadien modifizierten ungesättigten Polyesterharzes a1).

### 2) Herstellung einer UV-härtbaren wässrigen Polyurethan-Dispersion 2) auf Basis eines ungesättigten, mit Dicyclopentadien modifizierten Polyesterharzes

158,4 Teile der in Beispiel 1) hergestellten acetonischen Lösung der Komponente a1), 425,6 Teile des Polyesteracrylates Laromer^{®} PE44F (BASF AG, Ludwigshafen, DE), Komponente d), 26,8 Teile Dimethylolpropionsäure, Komponente c) 50,4 Teile Hexamethylendiisocyanat und 102,2 Teile Isophorondiisocyanat, Komponenten b) und 0,6 Teile Dibutylzinndilaurat werden in 180 Teilen Aceton gelöst und bis zu einem NCO-Gehalt von 1,6 Gew. -% bei 50°C unter Rühren umgesetzt. Der so erhaltenen Prepolymer-Lösung werden 20,2 Teile Triethylamin zugesetzt und untergerührt. Anschließend wird die entstandene klare Lösung unter Rühren in 1100 Teile destilliertes Wasser eingetragen. Anschließend wird eine Mischung aus 10,2 Teilen Ethylendiamin, Komponente g) und 31,0 Teilen Wasser der Dispersion unter Rühren zugesetzt. Anschließend wird das Aceton unter leichtem Vakuum aus der Dispersion abdestilliert. Es wird eine ungesättigte, mit Dicyclopentadien modifizierten Polyester enthaltende, Polyurethan-Dispersion 2) mit einem Feststoffgehalt von 42 Gew. -%, einer mittleren Teilchengröße von ca. 125 nm und einem pH-Wert von 7,9 erhalten.

**Anwendungstechnische Prüfung:**

| **Dispersion** | 2 |
|---|---|
| **Lagerstabilität:** | |
| 50°C/24 Stunden | o.k. |
| 40°C/28 Tage | o.k. |
| **Wasserfestigkeit:** | |
| (16 Stunden Belastung) | 5 |
| **Kaffeebeständigkeit:** | |
| (16 Stunden Belastung) | 5 |
| **Ethanol/Wasser (1.1-Gemisch)-Beständigkeit:** | 4 |
| (16 Stunden Belastung) | |
| **Rotweinbeständigkeit:** | |
| (16 Stunden Belastung) | 4 |
| **Physikalische Trocknung** | o.k. |
| zu einem klebfreien Film | |
| **Reaktivität** (Pendelhärte) | 164/157/118 sec |
| **Anfeuerung** | 5 |
| **Haftung** | 5 |
| **Weisanlaufen nach Verkratzung** | 5 |
| **Bewertungsstufen**: 0 bis 5 | |
| 5 = exzellent; 4 = sehr gut; 3 = gut; 2 = ausreichend; 1 = schwach, 0 = sehr schlecht | |

Zur anwendungstechnischen Prüfung werden die erfindungsgemäßen Dispersionen in einer einfachen Formulierung, bestehend aus jeweils einer homogenen Mischung aus 100 g Dispersion und 1g Fotoinitiator (Irgacure^{®} 500, Fa. Ciba, Lampertheim, DE) geprüft.

Die Bestimmung der Beständigkeitseigenschaften erfolgt auf dem Substrat Buche.

Die Anfeuerung des Holruntergrundes wird auf dem Substrat Sapeli durch optische Inaugenscheinnahme durch einen geschulten und erfahrenen Lacktechniker beurteilt.

Die Applikation erfolgt durch Aufziehen von 2 x 150 µm Nassfilmen mit Kastenrakel im Kreuzaufzug. Die Trocknung erfolgt bei 10 Min / 50°C je Applikation. Es erfolgt ein Zwischenschliff mit 400er Schleifpapier.

Die physikalische Trocknung wird nach Trocknung 10 Min/50°C (oder 1 Stunde /25°C) bestimmt. Ist der Film nach der Trocknung klebfrei, so ist die physikalische Trocknung o.k.. Es können dann auch Pendelhärten bestimmt werden, die üblicherweise im Bereich von 5 bis 30 s liegen.

Die UV- Härtung erfolgt mittels einer Hg Lampe 80W/cm bei einer Bandgeschwindigkeit von 5m/Min. Die fertigen Panele werden dann 16 h bei RT gelagert und anschließend denn Prüfungen unterzogen.

Die Pendelhärte bzw. Pendeldämpfung wird in Pendelsekunden nach König gemessen (DIN 53157).

Die Haftung wird durch Gitterschnitt-Test (DIN 53151) ermittelt. GT 0 wird als exzellente Haftung beurteilt (= Note 5)

Das Weisanlaufen nach Verkratzung wird durch Verkratzen mittels einer Münze geprüft. Ist an der Verkratzungsstelle keinerlei Weisanlaufen erkennbar, dann wird dieses Ergebnis als exzellent beurteilt (Note 5).

Die Reaktivität wird durch Erhöhung der Bandgeschwindigkeit (5 m/Min ; 10 m/Min; 15 m/Min) und Messung der jeweils erzielten Pendelhärte ermittelt. Wird auch bei hoher Bandgeschwindigkeit eine Pendelhärte > 100 s erzielt, dann zeichnet sich die Dispersion durch eine hohe Reaktivität aus.

### 3) Herstellung einer UV-härtbaren wässrigen Polyurethan-Dispersion 3) auf Basis eines ungesättigten, mit Dicyclopentadien modifizierten Polyesterharzes

158,4 Teile der in Beispiel 1) hergestellten acetonischen Lösung der Komponente a1), 425,6 Teile des Polyesteracrylates Laromer^{®} PE 44 F (BASF AG, Ludwighafen DE) d), 26,8 Teile Dimethylolpropionsäure und 12,3 Teile Polyether LB 25 (Bayer MaterialScience AG, Leverkusen, DE) c), 50,4 Hexamethylendiisocyanat und 102,2 Teile Isophorondiisocyanat b) und 0,6 Teile Zinndioctoat werden in 140 Teilen Aceton gelöst und bis zu einem NCO-Gehalt von 1,6 Gew. -% bei 50 °C unter Rühren umgesetzt. Der so erhaltenen Prepolymer-Lösung werden 20,2 Teile Triethylamin zugesetzt und untergerührt. Anschließend wird die entstandene klare Lösung unter Rühren in 1100 Teile destilliertes Wasser eingetragen und eine Mischung aus 10,2 Teilen Ethylendiamin, Komponente f) und 31,0 Teilen Wasser der Dispersion zugesetzt. Am Ende wird das Aceton unter leichtem Vakuum aus der Dispersion abdestilliert. Es wird eine ungesättigte, mit Dicyclopentadien modifizierten Polyester enthaltende, Polyurethan-Dispersion 3) mit einem Feststoffgehalt von 40,7 Gew. -%, einer mittleren Teilchengröße von ca. 96 nm und einem pH-Wert von 8,2 erhalten.

### 4) Herstellung einer UV-härtbaren wässrigen Polyurethan-Dispersion 4) auf Basis eines ungesättigten, mit Dicyclopentadien modifizierten Polyesterharzes

158,4 Teile der in Beispiel 1) hergestellten acetonischen Lösung der Komponente a1), 425,6 Teile des Polyesteracrylates Laromer^{®} PE 44 F (BASF AG, Ludwigshafen, DE) d), 26,8 Teile Dimethylolpropionsäure c), 45,4 Teile Hexamethylendiisocyanat und 94,4 Teile Isophorondiisocyanat b) und 0,6 Teile Dibutylzinndilaurat werden in 180 Teilen Aceton gelöst und bis zu einem NCO-Gehalt von 1,2 Gew. -% bei 50 °C unter Rühren umgesetzt. Der so erhaltenen Prepolymer-Lösung werden 20,2 Teile Triethylamin zugesetzt und untergerührt. Anschließend wird die entstandene klare Lösung unter Rühren in 1100 Teile destilliertes Wasser eingetragen und eine Mischung aus 6,6 Teilen Ethylendiamin, Komponente f) und 31,0 Teilen Wasser der Dispersion zugesetzt. Am Ende wird das Aceton unter leichtem Vakuum aus der Dispersion abdestilliert. Es wird eine ungesättigte, mit Dicyclopentadien modifizierten Polyester enthaltende, Polyurethan-Dispersion 4) mit einem Feststoffgehalt von 41,2 Gew. -%, einer mittleren Teilchengröße von ca. 170 nm und einem pH-Wert von 8,3 erhalten.

### 5) Herstellung des Polyesteracrylates d1)

In einer Edelstahlapparatur mit elektrischer Heizung, innenliegender Kühlschlange, Ankerrührer, Rückflusskühler, Glasbrücke, Wassersack und Stickstoffeinleitung bzw. -überleitung werden 797 Teile Maleinsäureanhydrid, 6006 Teile Polyether Desmophen^{®} 4011 T (Propoyxyliertes Trimethylolpropan, OH-Zahl 550 mg KOH/G Substanz; Bayer MaterialScience AG; Deutschland), 2106 Teile Acrylsäure, 3642 Teile Iso-Octan, 85,3 Teile Toluolsulfonsäure und 26,2 Teile Ditertbutylhydrochinon eingewogen und unter Überleiten von Luft und Stickstoff bei 95-105 °C unter Rückfluss erhitzt. Nach ca. 20 Stunden wird eine SZ < 5 erreicht und auf 50 °C abgekühlt. Im Anschluss wird bei Anfangs 50 °C and später 90 °C unter Vakuum das Lösungsmittel über eine Kolonne abdestilliert, dann belüftet und auf 40 °C abgekühlt. Es resultiert das Polyesteracrylat d1).

### 6) Herstellung einer UV-härtbaren wässrigen Polyurethan-Dispersion 2) auf Basis eines ungesättigten, mit Dicyclopentadien modifizierten Polyesterharzes

158,4 Teile der in Beispiel 1) hergestellten acetonischen Lösung der Komponente a1), 300,3 Teile des in Beispiel 5) hergestellten Polyesteracrylates d1), 26,8 Teile Dimethylol-propionsäure c), 50,4 Hexamethylendiisocyanat und 102,2 Teile Isophorondiisocyanat b) und 0,6 Teile Dibutylzinndilaurat werden in 140 Teilen Aceton gelöst und bis zu einem NCO-Gehalt von 1,6 Gew. -% bei 50 °C unter Rühren umgesetzt. Der so erhaltenen Prepolymer-Lösung werden 18,2 Teile Triethylamin zugesetzt und untergerührt. Anschließend wird die entstandene klare Lösung unter Rühren in 940 Teile destilliertes Wasser eingetragen und eine Mischung aus 10,2 Teilen Ethylendiamin f) und 31,0 Teilen Wasser der Dispersion zugesetzt. Am Ende wird das Aceton unter leichtem Vakuum aus der Dispersion abdestilliert. Es wird eine ungesättigte, mit Dicyclopentadien modifizierten Polyester enthaltende Polyurethan-Dispersion 6) mit einem Feststoffgehalt von 42,6 Gew. -%, einer mittleren Teilchengröße von ca. 135 nm und einem pH-Wert von 8,0 erhalten.

### 7) Herstellung des ungesättigten, mit Dicyclopentadien modifizierten Polyesterharzes a2)

In einer Edelstahlapparatur mit elektrischer Heizung, innen liegender Kühlschlange, Ankerrührer, Rückflusskühler, Kolonne, Glasbrücke und Stickstoffein- bzw. überleitung werden 43,88 Teile Maleinsäureanhydrid, 6,44 Teile Ethylenglykol, 39,84 Teile Diethylenglykol und 0,01 Teile Toluhydrochinon eingewogen, mit Stickstoff inertisiert und unter Überleiten von Stickstoff sowie unter Ausnutzung der exothermen Reaktion auf 190 °C aufgeheizt. Dabei steigt die Kopftemperatur nicht über 105 °C. Diese Temperatur wird gehalten bis durch Veresterung eine SZ von ca. 75 erreicht ist. Nach dem Abkühlen auf 150 °C werden 17,89 Teile Dicyclopentadien zugegeben und der Ansatz 5 Stunden bei 170 °C gehalten. Anschließend wird eine Kolonne mit Brücke aufgesetzt und die Temperatur über mehrere Stunden bei 205 °C gehalten bis die SZ auf unter 22 mg/g Substanz gefallen ist. Nach Abkühlen auf 80 °C werden 0,01 Teile Toluhydrochinon zugesetzt. Dann wird weiter auf 55 °C abgekühlt und in Aceton gelöst. Es resultiert eine ca. 70%ige Lösung eines mit Dicyclopentadien modifizierten ungesättigten Polyesterharzes a2).

### 8) Herstellung einer UV-härtbaren wässrigen Polyurethan-Dispersion 8) auf Basis eines ungesättigten, mit Dicyclopentadien modifizierten Polyesterharzes

242,6 Teile der in Beispiel 7) hergestellten acetonischen Lösung der Komponente a2), 425,6 Teile des Polyesteracrylates Laromer^{®} PE 44 F (BASF AG, Ludwigshafen, DE) d), 26,8 Teile Dimethylolpropionsäure c), 50,4 Teile Hexamethylendiisocyanat und 102,2 Teile Isophorondiisocyanat b) und 0,6 Teile Dibutylzinndilaurat werden in 180 Teilen Aceton gelöst und bis zu einem NCO-Gehalt von 1,6 Gew.-% bei 50 °C unter Rühren umgesetzt. Der so erhaltenen Prepolymer-Lösung werden 20,2 Teile Triethylamin zugesetzt und untergerührt. Anschließend wird die entstandene klare Lösung unter Rühren in 1150 Teile destilliertes Wasser eingetragen und eine Mischung aus 10,2 Teilen Ethylendiamin f) und 31,0 Teilen Wasser der Dispersion zugesetzt. Schließlich wird das Aceton unter leichtem Vakuum aus der Dispersion abdestilliert. Es wird eine ungesättigte, mit Dicyclopentadien modifizierten Polyester enthaltende, Polyurethan-Dispersion 8) mit einem Feststoffgehalt von 41,1 Gew. -%, einer mittleren Teilchengröße von ca. 160 nm und einem pH-Wert von 8,4 erhalten.

### 9) Herstellung des ungesättigten, mit Dicyclopentadien modifizierten Polyesterharzes a3)

In einer Edelstahlapparatur mit elektrischer Heizung, innen liegender Kühlschlange, Ankerrührer, Rückflusskühler, Kolonne, Glasbrücke und Stickstoffeinleitung bzw. -überleitung werden 30,08 Teile Maleinsäureanhydrid, 15,14 Teile Phthalsäureanhydrid und 20,20 Teile Diethylenglykol eingewogen, mit Stickstoff inertisiert und unter Überleiten von Stickstoff sowie unter Ausnutzung der exothermen Reaktion in einer Stunde auf 150 °C erhitzt und bei dieser Temperatur 1 Stunde gerührt, um die Halbesterbildung abzuschließen. Nach dem Abkühlen auf 140 °C werden 16,46 Teile Dicyclopentadien zugegeben und der Ansatz 4 Stunden bei 140 °C gehalten. Am Schluss werden SZ (205 +/- 5) und OHZ (< 15) bestimmt. Dann werden 5,95 Teile Ethylenglykol, 17,73 Teile Diethylenglykol und 0,02 Teile Toluhydrochinon zugegeben. Der Ansatz wird so auf 190 °C aufgeheizt, dass die Kopftemperatur nicht über 105 °C ansteigt und gehalten bis durch Veresterung eine SZ von ca. 12 und eine OHZ von 105 bis 125 mg KOH/g Substanz erreicht ist. Nach Abkühlen auf 150 °C werden 0,03 Teile Toluhydrochinon und 0,03 Teile Trimethylhydrochinon zugesetzt. Dann wird weiter auf 55 °C abgekühlt und in Aceton gelöst. Es resultiert eine ca. 72%ige Lösung eines mit Dicyclopentadien modifizierten ungesättigten Polyesterharzes a3).

### 10) Herstellung einer UV-härtbaren wässrigen Polyurethan-Dispersion 10) auf Basis eines ungesättigten, mit Dicyclopentadien modifizierten Polyesterharzes

122,4 Teile der in Beispiel 9) hergestellten acetonischen Lösung der Komponente a3), 425,6 Teile des Polyesteracrylates Laromer^{®} PE 44 F (BASF AG, Ludwigshafen, DE) d), 26,8 Teile Dimethylolpropionsäure c), 50,4 Teile Hexamethylendiisocyanat und 102,2 Teile Isophorondiisocyanat b) und 0,6 Teile Dibutylzinndilaurat werden in 180 Teilen Aceton gelöst und bis zu einem NCO-Gehalt von 1,6 Gew. -% bei 50 °C unter Rühren umgesetzt. Der so erhaltenen Prepolymer-Lösung werden 20,2 Teile Triethylamin zugesetzt und untergerührt. Anschließend wird die entstandene klare Lösung unter Rühren in 1100 Teile destilliertes Wasser eingetragen und eine Mischung aus 10,2 Teilen Ethylendiamin f) und 31,0 Teilen Wasser der Dispersion zugesetzt. Am Ende wird das Aceton unter leichtem Vakuum aus der Dispersion abdestilliert. Es wird eine ungesättigte, mit Dicyclopentadien modifizierten Polyester enthaltende, Polyurethan-Dispersion 10) mit einem Feststoffgehalt von 40,9 Gew. -%, einer mittleren Teilchengröße von ca. 168 nm und einem pH-Wert von 8,2 erhalten.

### 11) Herstellung des ungesättigten, mit Dicyclopentadien modifizierten Polyesterharzes a4)

In einer Edelstahlapparatur mit elektrischer Heizung, innenliegender Kühlschlange, Ankerrührer, Rückflusskühler, Kolonne, Glasbrücke und Stickstoffeinleitung bzw. -überleitung werden 41,32 Teile Maleinsäureanhydrid und 24,07 Teile 1,6-Hexandiol eingewogen, mit Stickstoff inertisiert und unter Überleiten von Stickstoff sowie unter Ausnutzung der exothermen Reaktion in einer Stunde auf 150 °C erhitzt und bei dieser Temperatur 1 Stunde gerührt, um die Halbesterbildung abzuschließen. Nach dem Abkühlen auf 140 °C werden 16,45 Teile Dicyclopentadien zugegeben und der Ansatz 4 Stunden bei 140 °C gehalten. Am Schluss werden SZ (205 +/- 5) und OHZ (< 15) bestimmt. Dann werden 5,49 Teile Ethylenglykol, 18,2 Teile 1,6-Hexandiol und 0,02 Teile Toluhydrochinon zugegeben. Der Ansatz wird so auf 190 °C aufgeheizt, dass die Kopftemperatur nicht über 105 °C ansteigt und gehalten bis durch Veresterung eine SZ von ca. 12 und eine OHZ von 105 bis 125 mg KOH/g Substanz erreicht ist. Nach Abkühlen auf 150 °C werden 0,03 Teile Toluhydrochinon und 0,03 Teile Trimethylhydrochinon zugesetzt. Dann wird weiter auf 55 °C abgekühlt und in Aceton gelöst. Es resultiert eine ca. 72%ige Lösung eines mit Dicyclopentadien modifizierten ungesättigten Polyesterharzes a4).

### 12) Herstellung einer UV-härtbaren wässrigen Polyurethan-Dispersion 2) auf Basis eines ungesättigten, mit Dicyclopentadien modifizierten Polyesterharzes

147,5 Teile der in Beispiel 11) hergestellten acetonischen Lösung der Komponente a4), 425,6 Teile des Polyesteracrylates Laromer^{®} PE 44 F (BASF AG, Ludwigshafen, DE), 26,8 Teile Dimethylolpropionsäure c), 50,4 Hexamethylendiisocyanat und 102,2 Teile Isophorondiisocyanat b) und 0,6 Teile Dibutylzinndilaurat werden in 180 Teilen Aceton gelöst und bis zu einem NCO-Gehalt von 1,6 Gew. -% bei 50 °C unter Rühren umgesetzt. Der so erhaltenen Prepolymer-Lösung werden 20,2 Teile Triethylamin zugesetzt und untergerührt. Anschließend wird die entstandene klare Lösung unter Rühren in 1100 Teile destilliertes Wasser eingetragen und eine Mischung aus 10,2 Teilen Ethylendiamin, Komponente f) und 31,0 Teilen Wasser der Dispersion zugesetzt. Am Ende wird das Aceton unter leichtem Vakuum aus der Dispersion abdestilliert. Es wird eine ungesättigte, mit Dicyclopentadien modifizierten Polyester enthaltende, Polyurethan-Dispersion 12) mit einem Feststoffgehalt von 41,6 Gew. -%, einer mittleren Teilchengröße von ca. 138 nm und einem pH-Wert von 8,5 erhalten.

**Anwendungstechnische Prüfung:**

| **Dispersion** | 3 | 4 | 6 | 8 | 10 | 12 |
|---|---|---|---|---|---|---|
| **Lagerstabilität:** | | | | | | |
| 50°C/24 Stunden | o.k. | o.k. | o.k. | o.k. | o.k. | o.k. |
| 40°C/28 Tage | o.k. | o.k. | o.k. | o.k. | o.k. | o.k. |
| **Wasserfestigkeit:** | | | | | | |
| (16 Stunden Belastung) | 5 | 5 | 5 | 5 | 5 | 5 |
| **Kaffeebeständigkeit:** | | | | | | |
| (16 Stunden Belastung) | 5 | 5 | 5 | 4 | 5 | 5 |
| **Ethanol/Wasser (1.1-Gemisch)-Beständigkeit:** | | | | | | |
| (16 Stunden Belastung) | 5 | 5 | 4 | 4 | 4 | 4/5 |
| **Rotweinbeständigkeit:** | | | | | | |
| (16 Stunden Belastung) | 4 | 5 | 4 | 4 | 5 | 5 |
| **Physikalische Trocknung** | o.k. | o.k. | o.k. | o.k. | o.k. | o.k. |
| zu einem klebfreien Film | | | | | | |
| **Reaktivität** (Pendelhärte) | 161/ | 154/ | 162/ | 164/ | 160/ | 147/ |
| | 151/ | 137/ | 140/ | 151/ | 148/ | 144/ |
| | 120 sec | 111 sec | 102 sec | 122 sec | 130 sec | 105 sec |
| **Anfeuerung** | 4/5 | 4/5 | 4 | 5 | 4/5 | 4/5 |
| **Haftung** | 5 | 5 | 5 | 5 | 4 | 5 |
| **Weisanlaufen nach Verkratzung** | 5 | 5 | 5 | 5 | 5 | 5 |

| | | | | | | |
|---|---|---|---|---|---|---|
| **Bewertungsstufen:** 0 bis 5 5 = exzellent; 4 = sehr gut; 3 = gut; 2 = ausreichend; 1 = schwach, 0 = sehr schlecht | | | | | | |

## Patentansprüche

1. Wässrige Polyurethan-Dispersionen, enthaltend ungesättigte, mit Dicyclopentadien modifizierte Polyesterharze als Aufbaukomponente.

2. Wässrige Polyurethan-Dispersionen gemäß Anspruch 1, **dadurch gekennzeichnet, dass** diese Umsetzungsprodukte aus
a) mindestens einem ungesättigten, mit Dicyclopentadien modifizierten Polyesterharz,
b) mindestens einem, mindestens difunktionellen Polyisocyanat und
c) mindestens einer hydrophilierenden Komponente enthalten.

3. Wässrige Polyurethan-Dispersionen gemäß Anspruch 1, **dadurch gekennzeichnet, dass** diese Umsetzungsprodukte aus
a) mindestens einem ungesättigten Polyesterharz,
b) mindestens einem, mindestens difunktionellen Polyisocyanat,
c) mindestens einer hydrophilierenden Komponente mit mindestens einer Hydroxy-, Amino- und/oder Thiogruppe und mindestens einer ionischen oder potentiell ionischen Gruppe und/oder Ethylenoxid-, Ethylenoxid/Propylenoxid-Copolymer und/oder Blockcopolymerstruktureinheiten,
d) mindestens einer Komponente ausgewählt aus der Gruppe der (Poly)ester(meth)acylate, (Poly)ether(meth)acrylate, (Poly)urethan(meth)acrylate, (Poly)epoxy(meth)acrylate, (Poly)etherester(meth)acrylate, ungesättigte Polyester mit Allyletherstruktureinheiten,
e) gegebenenfalls hydroxyfunktionellen Diolen und/oder Triolen des Molekulargewichts 62 bis 242 und/oder hydroxyfunktionellen Oligomere bzw. Polymeren wie Polyester, Polycarbonate, Polyurethane, C2-, C3-, und/oder C4-Polyether, Polyetherester, Polycarbonatpolyester des zahlenmittleren Molekulargewichtes 700 bis 4000 g/Mol und
f) mindestens einem Mono-, Di- und/oder Polyamin und/oder Hydroxyamin enthalten.

4. Wässrige Polyurethan-Dispersionen gemäß Anspruch 3, **dadurch gekennzeichnet, dass**
Komponente a) mindestens ein ungesättigtes Polyesterharz ist, welcher mit 5 bis 35 Gew.-% Dicyclopentadien modifiziert ist,
Komponente b) mindestens ein, mindestens difunktionelles Polyisocyanat ist, welches zu mindestens 60 Gew.-% aus aliphatischen und/oder cycloaliphatischen Polyisocyanaten besteht,
Komponente d) mindestens eine Verbindung ausgewählt aus der Gruppe der Polyesteracylate, Polyetheracrylate, Polyepoxyacrylate, Urethanacrylate und/oder Polyetheresteracrylate ist, welches neben den ungesättigten Gruppen noch Hydroxylgruppen aufweist.

5. Wässrige Polyurethan-Dispersionen gemäß Anspruch 1, **dadurch gekennzeichnet, dass** diese mindestens einen Initiator und gegebenenfalls weitere Hilfsmittel und Zusatzstoffe enthalten, die eine Aushärtung mit energiereicher Strahlung ermöglichen.

6. Wässrige Polyurethan-Dispersionen gemäß Anspruch 3, **dadurch gekennzeichnet, dass** diese Umsetzungsprodukte aus
3 bis 50 Gew. -% der Komponente a), 7 bis 50 Gew. -% der Komponente b), 1 bis 25 Gew. -% der Komponente c) 10 bis 75 Gew. -% der Komponente d) 0 bis 40 Gew. -% der Komponente e) und 0,1 bis 6 Gew. -% der Komponente f) enthalten,
wobei sich die Prozentangaben zu a) bis f) zu 100 Gew.-% ergänzen.

7. Wässrige Polyurethan-Dispersionen gemäß Anspruch 1, **dadurch gekennzeichnet, dass** diese weniger als 5 Gew.-% an organischen Lösemitteln enthalten.

8. Verfahren zur Herstellung der Polyurethan-Dispersionen gemäß Anspruch 1, **dadurch gekennzeichnet, dass** durch Umsetzung der Komponenten a), c), gegebenenfalls d) und e) in einem oder mehreren Reaktionsschritten, mit einem Überschuss an Komponente b) ein isocyanatfunktionelles Prepolymer erhalten wird, wobei das Neutralisationsmittel zur Erzeugung der für die Dispergierung notwendigen ionischen Gruppen vor, während oder nach dieser Prepolymer-Herstellung zugegeben werden kann, gefolgt durch Zugabe von Wasser zum Prepolymer oder Überführen des Prepolymeren in eine wässrige Vorlage, gegebenenfalls gefolgt durch einen Kettenverlängerungsschritt durch Zugabe der Komponente f).

9. Bindemittelmischungen enthaltend Polyurethan-Dispersionen gemäß Anspruch 1.

10. Beschichtungsmittel enthaltend Polyurethan-Dispersionen gemäß Anspruch 1 und einen Vernetzer.

11. Verwendung der Polyurethan-Dispersionen gemäß Anspruch 1 zur Herstellung von Lacken, Beschichtungen oder Klebstoffen.
